# EUROPÄISCHE PATENTANMELDUNG

(11) **EP 1 389 502 A1**
(43) Veröffentlichungstag der Anmeldung: **18.02.2004**
(21) Anmeldenummer: 03018002.0
(22) Anmeldetag: 07.08.2003
(51) Int. Cl.: B23C 5/10

(54) **Bohr oder Fräswerkzeug und Verfahren zu dessen Herstellung**

(30) Priorität: 16.08.2002 DE 10238334
(71) Anmelder: SANDVIK AKTIEBOLAG, 811 81 Sandviken (SE)
(72) Erfinder: Giessler, Josef, 77796 Mühlenbach (DE); Svensson, Jonas, 77655 Offenburg (DE)
(74) Vertreter: Weber, Dieter, Dr.

(57) **Zusammenfassung**

Die vorliegende Erfindung betrifft ein Bohr- und/oder Fräswerkzeug, mit einem Schaft (1) und einem Schneidteil (2), wobei der Schneidteil (2) an seinem Umfang spiralförmig bis zur Stirnseite des Schneidteiles (2) verlaufende Spannuten (3) und an seiner Stirnseite Schneidkanten (4) aufweist, die durch den Schnitt eines Teil der Spannutenflächen mit der Stirnfläche des Werkzeuges gebildet werden, wobei der bezüglich einer die Achse des Werkzeuges enthaltenden Ebene gemessene Drallwinkel (γₚ₂) der Spannuten (3) größer ist als der zu einer entsprechenden Ebene gemessene Winkel (γₚ₁) der an die stirnseitigen Schneidkanten (4) angrenzenden Spanflächen, welche durch einen unteren Endabschnitt der Spannuten (3) gebildet werden, wobei der Spanflächenwinkel (γₚ₁), ausgehend von der stirnseitigen Schneidkante (4) kontinuierlich in den Drallwinkel (γₚ₂) der Spannuten (3) übergeht.

## Beschreibung

Die vorliegende Erfindung betrifft ein Bohr- oder Fräswerkzeug mit einem Schaft und einem Schneidteil, wobei der Schneidteil an seinem Umfang spiralförmig umlaufende und sich bis zur Stirnseite des Schneidteils erstreckende Spannuten, sowie an seiner Stirnseite Schneidkanten aufweist, die durch den Schnitt eines Teils der Spannutenflächen mit der Stimfläche des Werkzeuges gebildet werden, wobei der zu einer die Werkzeugachse enthaltenden Ebene gemessene Drallwinkel der Spannuten größer ist als der zu einer entsprechenden Ebene gemessene Winkel der an die stirnseitigen Schneidkanten angrenzenden Spanflächen. Entsprechende Bohr- oder Fräswerkzeuge sind schon seit einiger Zeit bekannt. Insbesondere Bohrer oder Fräser, die aus besonders harten Werkstoffen, wie z.B. Sintercarbid, Bornitrid, Siliciumnitrid oder Mischungen hiervon bestehen, sind im Bereich der stirnseitigen Schneidkanten mehr oder weniger stark bruchgefährdet. Dabei ist festzustellen, daß manche Materialien bei zunehmender Härte und Verschleißbeständigkeit leider auch zunehmend brüchiger werden. Zwar ist es in den vergangenen Jahren schon mit vielfältigen Herstellungsmethoden gelungen, entsprechende Hartstoffe zäher zu machen, so daß sie weniger leicht ausbrechen, andererseits wirken diesen Verbesserungen jedoch zunehmende Anforderungen an die Schneidkantengeometrie entgegen.

So gibt es inzwischen bereits seit längerem Bohrer oder auch Stirnfräser, die aus einem massiven Hartstoffmaterial, wie z.B. Wolframcarbid oder einem der oben genannten Materialien, bestehen. Bei entsprechenden Werkzeugen, die spiralförmig umlaufende Nuten haben, wird der Spanwinkel der stirnseitigen Schneidkanten im wesentlichen durch den Drallwinkel der Spannuten definiert. Dies liegt daran, daß die Schneidkanten durch den Schnitt zwischen Spannut und Stirnfläche des Werkzeuges gebildet werden.

Bei dem entsprechenden Verfahren zur Herstellung eines Bohr- oder Fräswerkzeuges, welches einen Schaft und einen im wesentlichen zylindrischen Schneidteil aufweist, wird nämlich mit Hilfe einer zur Achse des Werkzeuges geneigten, rotierenden Schleifscheibe während einer axialen Relativbewegung zwischen Schleifscheibe und Werkzeug und bei einer gleichzeitigen Drehung des Schneidteils um seine Achse die Spannuten spiralförmig in den Schneidteil eingeschliffen. Soweit Spannuten bereits beim Herstellen oder Sintern vorgeformt sind, werden die Spannuten durch diesen Vorgang fertiggestellt und nachgeschliffen. Da die Schneidkante im wesentlichen durch die von einem flachen, ebenen Teil der Schleifscheibe hergestellte Wand der Spannut gebildet wird und die Achse der Schleifscheibe genau unter dem Komplementärwinkel zum Drallwinkel relativ zur Achse des Schneidteils geneigt ist, ergibt sich für diesen Abschnitt der Spannutfläche eine Neigung relativ zu einer die Achse des Werkzeuges enthaltenden Ebene um eben den gewünschten Drallwinkel zu erzielen und da diese Fläche sich bis zur Stirnseite des Werkzeuges fortsetzt, bildet dieser Teil der Nutfläche schließlich auch die Spanfläche, die in entsprechender Weise zur Achse des Werkzeugs geneigt ist. Läßt man einen axialen Vorschub des Werkzeuges unberücksichtigt, der im übrigen auch bei Bohrern pro Umdrehung nicht übermäßig groß ist, so entspricht der Drallwinkel genau dem Spanwinkel der stirnseitigen Schneidkante. Dabei bleiben Variationen dieses Spanwinkels in radialer Richtung, die notwendigerweise aufgrund des steileren spiraligen Verlaufs der Spannuten näher am Zentrum bzw. der Achse des Schneidwerkzeuges auftreten müssen, zunächst unberücksichtigt.

Zur Erzielung geringer Schneidkräfte ist es wünschenswert, den Spanwinkel möglichst groß zu machen. Dies führt allerdings zu einem zunehmend kleineren Keilwinkel zwischen Spanfläche und Freifläche, so daß die Schneidkante auch im Profil immer scharfkantiger bzw. spitzwinkliger erscheint, wobei sie allerdings auch einer erhöhten Bruchgefahr ausgesetzt ist. Andererseits trägt der große Drallwinkel der Spannuten auch zu einer verbesserten Abfuhr von Spänen bei und ist deshalb auch aus diesem Grund erwünscht.

Es ist bereits versucht worden, die sich aus einem großen Drallwinkel ergebenden Probleme der Bruchanfälligkeit der Schneidkante dadurch zu beheben, daß man die Schneidkante "gebrochen" hat, das heißt, eine Fase angeschliffen hat, die die Schneidkante weniger scharfkantig macht, wobei die so gebildete Fläche der Fase den unmittelbar an die Schneidkante angrenzenden Spanflächenbereich definiert und somit eine Spanfläche bildet, die einen erheblich kleineren (positiven) Spanwinkel hat.

Allerdings erfordert eine solche Fase eine relativ aufwendige und umständliche Herstellung, da nach dem Herstellen der Spannuten das Werkzeug nochmals in einem neuen Arbeitsschritt mit einem entsprechenden Schleifwerkzeug bearbeitet werden muß, welches die Abfasung an der Schneidkante herstellt.

Nachteilig ist auch, daß durch die Abfasung der Schneidkante die entstehenden Schneidkräfte wieder beträchtlich erhöht werden.

Gegenüber diesem Stand der Technik liegt der vorliegenden Erfindung die Aufgabe zugrunde, ein Bohr- oder Fräswerkzeug sowie ein Verfahren zu dessen Herstellung zu schaffen, welches geringe Schnittkräfte aufweist und dennoch einen großen Drallwinkel zur Erzeugung eines guten Spantransportes und günstiger Zerspanverhältnisse zu schaffen.

Hinsichtlich des eingangs erwähnten Bohr- oder Fräswerkzeuges wird die der Erfindung zugrunde liegende Aufgabe dadurch gelöst, daß der Spanflächenwinkel, ausgehend von der stirnseitigen Schneidkante, kontinuierlich in den Drallwinkel der Spannuten übergeht.

Wie bereits erwähnt, ist der Spanwinkel der Winkel zwischen der Spanfläche und einer Normalen zu der erzeugten Oberfläche. Da die erzeugte Oberfläche im wesentlichen der Stirnfläche des Werkzeuges entspricht, entspricht eine Normale zur Schneidkante im wesentlichen der Werkzeugachse, wobei auch im Fall einer mehr oder weniger kegelförmigen Stirnfläche der Spanwinkel relativ zu einer die Achse enthaltenden Ebene und in einer parallel zur Achse verlaufenden Ebene gemessen wird. Ein kontinuierlich von einem kleineren Spanwinkelwert in den Wert des Drallwinkels übergehender Zahlenwert entspricht dann einer zur Spitze hin kontinuierlich steiler verlaufenden Spannut bzw. zumindest derjenigen Nutfläche, die mit der Stirnfläche eine Schneidkante definiert.

Anders ausgedrückt, könnte man das kennzeichnende Merkmal der Erfindung auch so formulieren, daß im Endbereich des Werkzeuges der Drallwinkel zur Stirnfläche des Bohrers kontinuierlich kleiner wird.

Hinsichtlich des entsprechenden Verfahrens wird die der Erfindung zugrunde liegende Aufgabe dadurch gelöst, daß bei der Annäherung des aktiven Schleifscheibenbereiches an die Stirnfläche des Werkzeuges die Achse der Schleifscheibe (noch weiter) in Richtung der Erzeugung eines kleineren Drallwinkels kontinuierlich verkippt wird. Die Achse der Schleifscheibe, die eine flache, an ihrem äußeren Umfang abgerundete Scheibe ist, deren Dicke der maximalen Breite der Spannut entspricht und deren abgerundeter Außenumfang im Profil dem Profil der Spannut entspricht, ist relativ zu der Achse des Werkzeuges um einen Winkel geneigt, der dem Komplementärwinkel zum Drallwinkel entspricht. Wenn also der Drallwinkel mit γₚ₂ bezeichnet wird, so hat die Achse der Schleifscheibe relativ zur Achse des Werkzeuges eine Neigung von 90°- γₚ₂. Eine Zunahme des Winkels zwischen Schleifscheibenachse und Werkzeugachse bedeutet also eine Verkleinerung des Drallwinkels, so daß letztlich, wenn der aktive Schleifscheibenbereich den axialen Endabschnitt der Spannut schleift, der minimale Drallwinkel erreicht ist, der dann auch dem Spanwinkel γₚ₀ entspricht.

Dabei ist es auch möglich, den Spanwinkel γₚ₀ bis auf den Wert 0 abzusenken oder sogar negativ zu machen, indem die Achse der Schleifscheibe bei der Annäherung des Arbeitsbereiches an die Stirnfläche des Werkzeuges gegenüber der Achse des Werkzeuges um 90° und darüber hinaus verkippt wird.

Weiterhin ist es möglich, das Verhältnis der axialen Relativgeschwindigkeit zwischen Schleifscheibe und Werkzeug und der Winkelgeschwindigkeit bei der Drehung des Werkzeuges um seine eigene Achse bei der Annäherung an die Werkzeugstirnfläche zu verändern, insbesondere zu vergrößern, während das Verkippen der Schleifscheibenachse mit kontinuierlicher Geschwindigkeit erfolgt. Stattdessen kann aber auch die Verkippung zunächst etwas langsamer oder etwas schneller erfolgen oder umgekehrt, wodurch ganz bestimmte, gewünschte Profile des kontinuierlichen Übergangs zwischen Spanwinkel und Drallwinkel erzeugt werden. Erfindungsgemäß ist ein Werkzeug bevorzugt, bei welchem der Übergang vom Spanwinkel zum Drallwinkel, ausgehend von der Schneidkante, zunächst mit einem relativ kleinen Übergangsradius erfolgt, während der letzte Abschnitt des Übergangs zum Drallwinkel über einen größeren Krümmungsradius erfolgt. Der Krümmungsradius des Übergangsbereiches, dessen Richtung im übrigen auch der Richtung der Schleifscheibenachse entspricht und dessen Richtung insofern den Komplementärwinkel zu dem jeweils aktuellen Drallwinkel bzw. Spanwinkel bildet, kann sich beim Übergang von dem Spanwinkel an der Schneidkante in den axial weiter innen liegenden, konstanten Drallwinkel auch kontinuierlich verändern.

Die axiale Erstreckung dieses Übergangsbereiches entspricht allerhöchstens dem Durchmesser des Werkzeuges und beträgt vorzugsweise weniger als der halbe Durchmesser des Werkzeuges. Sofern im äußeren Eckbereich beim Übergang von der Stirnfläche zur Umfangsfläche des Schneidteiles eine Abfasung oder Abrundung dieses Eckbereiches vorgesehen ist, erstreckt sich der allmähliche Übergang vom Spanwinkel zum Drallwinkel über mindestens die gleiche axiale Länge.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Seitenansicht eines erfindungsgemäßen Werkzeuges in Form eines Stirnfräsers,
- Figur 2: die Draufsicht auf die Stirnfläche des in Figur 1 dargestellten Fräsers,
- Figur 3a: einen vergrößerten Ausschnitt des unteren Bereiches des Schneidteils nach Figur 1 und
- Figuren 3b und c: einen nochmals vergrößerten Ausschnitt des Verlaufes der Hauptschneidkante 5 im Stirnbereich des Fräsers in zwei verschiedenen Varianten.

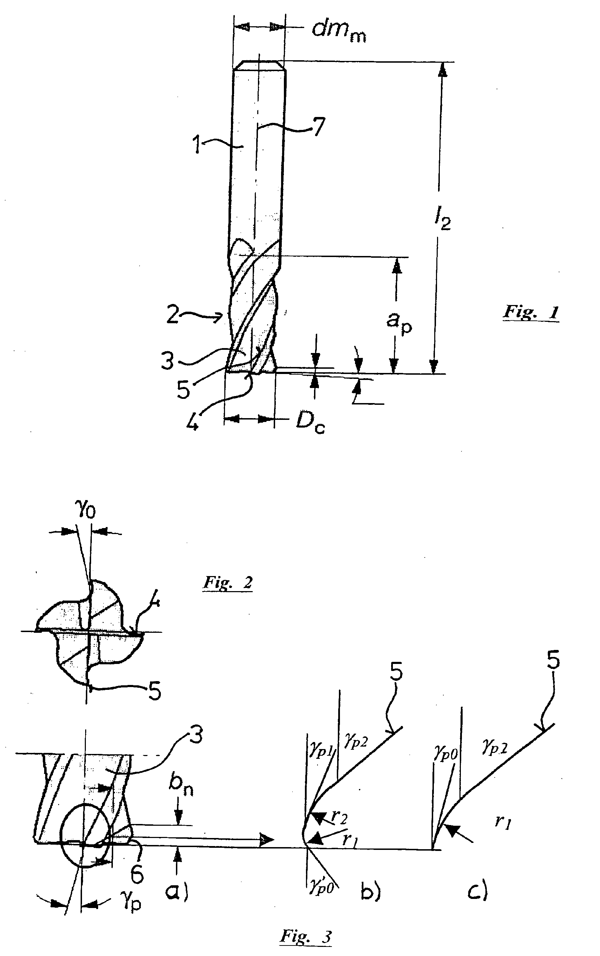

Man erkennt in Figur 1 einen Stirnfräser mit einem Schaft 1 für das Einspannen in eine entsprechende Werkzeugmaschine und mit einem Schneidteil 2, der mehrere spiralförmige Nuten 3, eine Stirnseite mit im wesentlichen radial verlaufenden stirnseitigen Schneidkanten 4 und am Umfang des Fräsers parallel zu den Spannuten verlaufenden Schneidkanten 5. Die Spannuten 3 werden hergestellt, indem eine flache Schleifscheibe, deren Dicke der Breite der Spannuten 3 entspricht, relativ zur Achse 7 des Fräsers geneigt wird, um die Nuten in die zylindrische Wand des Schneidteils einzuschleifen, wobei während dieses Schleifvorganges eine axiale Relativbewegung zwischen Schleifscheibe und Fräser erfolgt und dabei gleichzeitig das Fräswerkzeug um die Achse 7 gedreht wird. Das Verhältnis der Axialgeschwindigkeit zur Drehgeschwindigkeit des Fräsers bestimmt dann den Drallwinkel der Nuten 3 und wird im allgemeinen so abgestimmt, daß die Achse der Schleifscheibe mit der Achse 7 des Werkzeuges den bezüglich 90° komplementären Winkel des Drallwinkels γₚ₂ einschließt. Die Schnittlinien zwischen den Spannuten und dem äußeren Umfang des Werkzeuges bilden Schneidkanten, und zwar am Umfang des ursprünglich zylindrischen Schneidteils 2 die Hauptschneidkanten 5 und an der Stirnseite die stirnseitigen Schneidkanten 4.

Bei einem Bohrwerkzeug sind die Verhältnisse ähnlich, wobei bei einem Bohrer allerdings die Schneidkanten 4 die Hauptschneidkanten wären, während die am Umfang vorgesehenen Schneidkanten 5 als Nebenschneidkanten bezeichnet werden würden.

Der Drallwinkel wird im allgemeinen auf den Winkel der äußeren Hauptschneidkanten 5 bezogen, den diese mit einer die Achse enthaltenden Ebene einschließen. In einer Abwinklung in einer Ebene würde sich ein im wesentlichen gerader Schneidkantenverlauf ergeben und der Drallwinkel entspricht dann dem Winkel zur Vertikalen.

In der Draufsicht auf die Stirnfläche des Fräsers gemäß Figur 2 erkennt man, daß der Fräser vier Spannuten und vier Hauptschneidkanten 5 sowie vier Nebenschneidkanten 4 an der Stimfläche aufweist. Die Hauptschneidkanten 5 haben einen Seitenspanwinkel γ₀, der ebenso wie der Spanwinkel der Nebenschneidkanten 4 im allgemeinen positiv ist. Die vorliegende Erfindung betrifft vor allem die Ausgestaltung der Nebenschneidkanten bzw. der Spanflächen im Bereich der Nebenschneidkanten 4. Dieser Verlauf ist in Figur 3 genauer dargestellt. Figur 3a zeigt nochmals den unteren Abschnitt des in Figur 1 dargestellten Fräsers, wobei man in diesem Fall auch eine Abfasung 6 der äußeren Eckübergänge zwischen der Stirnfläche und der Umfangsfläche des Fräsers erkennt. Der untere Endabschnitt der Hauptschneidkanten 5 in einer dem eingekreisten Bereich der Figur 3a entsprechenden Ansicht ist in den Figuren 3b und 3c für zwei verschiedene Ausführungsformen dargestellt. Wie man erkennt, verläuft die Hauptschneidkante 5 relativ zur Achse 7 des Fräsers um einen Winkel γₚ₂ geneigt, der, wie bereits erwähnt, als Drallwinkel bezeichnet wird. Bei dem kontinuierlichen, unveränderten Verlauf der Hauptschneidkante 5 bis zur Stimseite des Bohrers entspräche dieser Drallwinkel γₚ₂ gleichzeitig auch dem Spanwinkel der Nebenschneidkante 4. Wie man jedoch in den Figuren 3b und c sieht, verläuft die Hauptschneidkante 5 zur Stirnseite des Fräsers hin zunehmend steiler auf einem gekrümmten Bogen und erreicht in Figur 3c schließlich einen minimalen (positiven) Wert γₚ₀ und im Falle der Figur 3b einen ebenfalls minimalen, nunmehr aber negativen Wert γ'ₚ₀. In Figur 3c verläuft der Übergang von dem Drallwinkel γₚ₂ zu dem Spanwinkel γₚ₀ der Hauptschneidkante entlang eines konstanten Radius R1. Im Falle der Figur 3b sind zwei Übergangsradien R2 und R1 vorgesehen, wobei der Radius R1 am untersten Ende der Hauptschneidkante 5 kleiner als der Radius R2 ist.

Es gibt jedoch auch Varianten und Ausführungsformen, bei welchen von der Schneidkante 4 ausgehend der Spanwinkel oder genauer gesagt der sich ändernde Winkel der Spanfläche relativ zur Fräserachse zunächst entlang eines relativ großen Radius (bezogen auf die Krümmung der Hauptschneidkante 5) nur allmählich zunimmt und dann einen kleineren Übergangsradius zu dem Drallwinkel γₚ₂ hat.

Das erfindungsgemäße Werkzeug vereinigt die positiven Eigenschaften von Werkzeugen mit großem Drallwinkel und einer deutlich positiven Nebenschneidkante mit der Stabilität eines Werkzeuges mit einer weniger positiven und gegebenenfalls sogar negativen Schneidkante und hat außerdem den Vorteil einer relativ einfachen und schnellen Herstellung, weil nämlich der Übergang von dem größeren Drallwinkel zu dem kleineren Spanwinkel gleichzeitig mit der Herstellung der Spannuten bewirkt wird, indem während des Endabschnittes des Schleifvorgangs die Achse der Schleifscheibe programmgesteuert verkippt wird, so daß sich je nach dem eingestellten Programm die gewünschte Kontur und auf jeden Fall ein allmählicher Übergang von dem Drallwinkel zu dem endgültigen Spanwinkel ergibt.

## Patentansprüche

1. Bohr- und/oder Fräswerkzeug, mit einem Schaft (1) und einem Schneidteil (2), wobei der Schneidteil an seinem Umfang spiralförmig bis zur Stirnseite des Schneidteiles (2) verlaufende Spannuten (3) und an seiner Stirnseite Schneidkanten (4) aufweist, die durch den Schnitt eines Teil der Spannutenflächen mit der Stirnfläche des Werkzeuges gebildet werden, wobei der bezüglich einer die Achse des Werkzeuges enthaltenden Ebene gemessene Drallwinkel (γₚ₂) der Spannuten (3) größer ist als der zu einer entsprechenden Ebene gemessene Winkel (γₚ₀) der an die stirnseitigen Schneidkanten (4) angrenzenden Spanflächen, welche durch einen unteren Endabschnitt der Spannuten gebildet werden, **dadurch gekennzeichnet, daß** der Spanflächenwinkel (γₚ₀), ausgehend von der stirnseitigen Schneidkante (4) kontinuierlich in den Drallwinkel (γₚ₁) der Spannuten übergeht.

2. Bohr- oder Fräswerkzeug nach Anspruch 1, **dadurch gekennzeichnet, daß** der Spanflächenwinkel von dem als Spanwinkel (γₚ₀) in dem unmittelbar an die Schneidkante (4) angrenzenden Bereich definierten Wert über einen konstanten Krümmungsradius in den Drallwinkel (γₚ₂) übergeht.

3. Bohr- oder Fräswerkzeug nach Anspruch 1, **dadurch gekennzeichnet, daß** der Übergang vom Spanwinkel (γₚ₀) zum Drallwinkel (γₚ₂) über mindestens zwei verschiedene Radien erfolgt, wobei der an die Schneidkante angrenzende Radius kleiner ist als der Radius in dem an den Drallwinkel (γₚ₂) angrenzenden Bereich.

4. Bohr- oder Fräswerkzeug nach einem der Ansprüche 1 bis 3, **dadurch gekennzeichnet, daß** ein unmittelbar an die Schneidkante angrenzender Spanflächenabschnitt einen negativen Spanwinkel aufweist, der mit zunehmendem Abstand von der Schneidkante zunächst 0 und anschließend positiv wird und schließlich in den Drallwinkelwert (γₚ₂) übergeht.

5. Bohr- oder Fräswerkzeug nach einem der Ansprüche 1 bis 4, **dadurch gekennzeichnet, daß** sich der Übergangsbereich von der Schneidkante bis zum konstanten Drallwinkel (γₚ₂) in axialer Richtung über eine Strecke erstreckt, die kleiner als der Werkzeugdurchmesser, vorzugsweise kleiner als der halbe Werkzeugdurchmesser ist.

6. Bohr- oder Fräswerkzeug nach einem der Ansprüche 1 bis 5, **dadurch gekennzeichnet, daß** an dem Eckenübergang der Stirnfläche zur Umfangsfläche des Werkzeuges eine Abfasung oder Abrundung vorgesehen ist, wobei die axiale Erstreckung der Abfasung oder Abrundung kleiner ist als die axiale Erstreckung des Übergangsbereichs von der Schneidkante zu dem Drallwinkel.

7. Bohr- oder Fräswerkzeug nach einem der Ansprüche 1 bis 6, **dadurch gekennzeichnet, daß** der durch den unmittelbar an die Schneidkanten (4) anschließenden Spanflächenabschnitt definierte Spanwinkel (γₚ₀) gleich dem Seitenspanwinkel der am Umfang des Werkzeuges vorgesehenen Schneidkanten (5) ist, welche durch den Schnitt der Spannuten mit der Umfangsfläche des Schneidteils (2) gebildet werden.

8. Verfahren zur Herstellung eines Bohr- oder Fräswerkzeuges, welches einen Schaft (1) und ein im wesentlichen zylindrisches Schneidteil (2) aufweist, wobei mit Hilfe einer zur Achse des Werkzeuges geneigten, rotierenden Schleifscheibe während einer axialen Relativbewegung zwischen Schneidteil und Schleifscheibe und einer gleichzeitigen Drehung um die Achse des Schneidteiles (2) spiralförmige Spannuten in den Schneidteil eingeschliffen bzw. fertiggestellt werden, **dadurch gekennzeichnet, daß** bei einer Annäherung des aktiven Schleifscheibenbereiches an die Stirnfläche des Werkzeuges die Achse der Schleifscheibe weiter in Richtung der Erzeugung eines kleineren Drallwinkels kontinuierlich verkippt wird.

9. Verfahren nach Anspruch 8, **dadurch gekennzeichnet, daß** das Verhältnis der axialen Relativgeschwindigkeit zwischen Werkzeug und Schleifscheibe zur Winkelgeschwindigkeit der Drehung um die Werkzeugachse bei der Annäherung an die Werkzeugstirnfläche vergrößert wird.

10. Verfahren nach Anspruch 9, **dadurch gekennzeichnet, daß** das Verhältnis der axialen Relativgeschwindigkeit zur Winkelgeschwindigkeit der Drehbewegung um die Werkzeugachse mit einem variabel einstellbaren Beschleunigungsprofil erfolgt.
